# EUROPEAN PATENT APPLICATION

(11) **EP 4 679 098 A1**
(43) Date of publication of application: **14.01.2026**
(21) Application number: 23927625.6
(22) Date of filing: 13.12.2023
(51) Int. Cl.: G01N 35/04, B25J 15/00

(54) **GRIPPING DEVICE AND AUTOMATIC ANALYSIS DEVICE**

(30) Priority: 10.03.2023 JP 2023037441
(71) Applicant: HITACHI HIGH-TECH CORPORATION, Tokyo 105-6409 (JP)
(72) Inventor: UEDA Keita, Tokyo 105-6409 (JP); OKABE Shugo, Tokyo 105-6409 (JP); YAMASHITA Taichiro, Tokyo 105-6409 (JP); NODA Kazuhiro, Tokyo 105-6409 (JP)
(74) Representative: MERH-IP Matias Erny Reichl Hoffmann Patentanwälte PartG mbB
(86) International application number: PCT/JP2023/044575
(87) International publication number: WO 2024/190021

(57) **Abstract**

To provide a gripping device and an automatic analyzer capable of discriminating more precisely compared to a prior art, three states of a state that a gripping member closes without gripping anything, a state that the gripping member opens without gripping anything, and a state that the gripping member grips a gripping object. An actuator sensor 248 detects either of a state that an actuator 243 is in an operation of opening gripping members 241, 242 or a state that the actuator 243 is in an operation of closing the gripping members, by shielding first detection light such that an actuator sensor light-shielding member 250 enters between a first light projecting unit and a first light receiving unit, and a gripping member sensor 247 detects either of a state that the gripping members 241, 242 are closed or a state that the gripping members are opened or gripping a container, by shielding second detection light such that a gripping member sensor light-shielding member 249 enters between a second light projecting unit and a second light receiving unit.

## Description

### Technical Field

The present invention relates to a gripping device and an automatic analyzer.

### Background Art

In an analyzer that detects a measurement target contained in a sample, there is known a device that performs processing by reacting the sample and a reagent in a container. Here, a container transportation mechanism for gripping the container and moving the container in a horizontal direction and a vertical direction is disclosed (see PTL 1).

### Citation List

### Patent Literature

PTL 1: JP2018-169165A

### Summary of Invention

### Technical Problem

According to PTL 1, based on an operation state of an actuator and a state of a gripping member detected by a sensor, three states are distinguished, that is, a state in which the gripping member is closed without gripping anything, a state in which the gripping member is opened without gripping anything, and a state in which the gripping member grips a container that is a gripping object.

However, there is a problem that distinction of the states depends on the operation state of the actuator itself, and reliability of distinguishing the three states is low.

An object of the invention is to solve the above problem and to provide a gripping device and an automatic analyzer that can distinguish, more accurately as compared to the related art, three states, that is, a state in which a gripping member is closed without gripping anything, a state in which the gripping member is opened without gripping anything, and a state in which the gripping member grips a gripping object.

### Solution to Problem

The invention includes a plurality of aspects for solving the above problem, and an example thereof includes: a gripping unit gripping a gripping object by sandwiching the gripping object with two or more members that are opened/closed by an actuator; a first sensor including a first light projecting unit and a first light receiving unit, the first light projecting unit projecting first detection light, the first light receiving unit receiving the first detection light; a second sensor including a second light projecting unit and a second light receiving unit, the second light projecting unit projecting second detection light, the second light receiving unit receiving the second detection light; a determination unit that executes determination related to three states of a state that the member opens without gripping the gripping object, a state that the member closes without gripping the gripping object, and a state that the member grips the gripping object, based on detection information of the first sensor and the second sensor; a first light-shielding member that is interlocked with the actuator; and a second light-shielding member that is interlocked with either one or more of the members, in which the first sensor detects either of a state that the actuator is in an operation of opening the member or a state that the actuator is in an operation of closing the member, by shielding the first detection light in a manner that the first light-shielding member enters between the first light projecting unit and the first light receiving unit, and the second sensor detects either of a state that the member is closed or a state that the member is opened or grips the gripping object, by shielding the second detection light in a manner that the second light-shielding member enters between the second light projecting unit and the second light receiving unit.

Another example includes: a gripping unit gripping a gripping object by sandwiching the gripping object with two or more members that are opened/closed by an actuator; a first sensor including a first light projecting unit and a first light receiving unit, the first light projecting unit projecting first detection light, the first light receiving unit receiving the first detection light; a second sensor including a second light projecting unit and a second light receiving unit, the second light projecting unit projecting second detection light, the second light receiving unit receiving the second detection light; a determination unit that executes determination related to three states of a state that the member opens without gripping the gripping object, a state that the member closes without gripping the gripping object, and a state that the member grips the gripping object, based on detection information of the first sensor and the second sensor; a first light-shielding member that is interlocked with the actuator; and a second light-shielding member that is interlocked with either one or more of the members, in which opening/closing operation of the gripping unit is executed by rotating operation of the actuator and rotating operation of the member that is interlocked with the rotating operation of the actuator, the first light projecting unit and the first light receiving unit are disposed so that the first detection light is shielded by the first light-shielding member when the actuator rotates by a first angle, and the second light projecting unit and the second light receiving unit are disposed so that the second detection light is shielded by the second light-shielding member when the member rotates by a second angle.

### Advantageous Effects of Invention

According to the invention, it is possible to distinguish the three states more accurately as compared to the related art. Problems, configurations, and effects other than those described above will be clarified by the following description of an embodiment.

### Brief Description of Drawings

[FIG. 1] FIG. 1 is a plan view illustrating a configuration example of an automatic analyzer of an embodiment.
[FIG. 2] FIG. 2 is a detailed explanatory drawing of a consumables transportation unit in the automatic analyzer of the embodiment.
[FIG. 3] FIG. 3 is a cross-sectional view taken along a line B-B of FIG. 2.
[FIG. 4] FIG. 4 is an outer appearance view of a container gripping device of the automatic analyzer of the embodiment.
[FIG. 5] FIG. 5 is a front view illustrating a state of closing a gripping member of the container gripping device of the automatic analyzer of the embodiment.
[FIG. 6] FIG. 6 is a drawing as viewed along the arrow C-C of FIG. 5.
[FIG. 7] FIG. 7 is a cross-sectional view illustrating a positional relation of a sensor and a light-shielding member in a state of closing the gripping member, of the container gripping device of the automatic analyzer of the embodiment.
[FIG. 8] FIG. 8 is a cross-sectional view illustrating a positional relation of the sensor and the light-shielding member in a state of opening the gripping member, of the container gripping device of the automatic analyzer of the embodiment.
[FIG. 9] FIG. 9 is a cross-sectional view illustrating a positional relation of the sensor and the light-shielding member in a state of gripping a container, of the container gripping device of the automatic analyzer of the embodiment.
[FIG. 10] FIG. 10 is a matrix diagram of determination of the gripping state in the automatic analyzer of the embodiment.

### Description of Embodiments

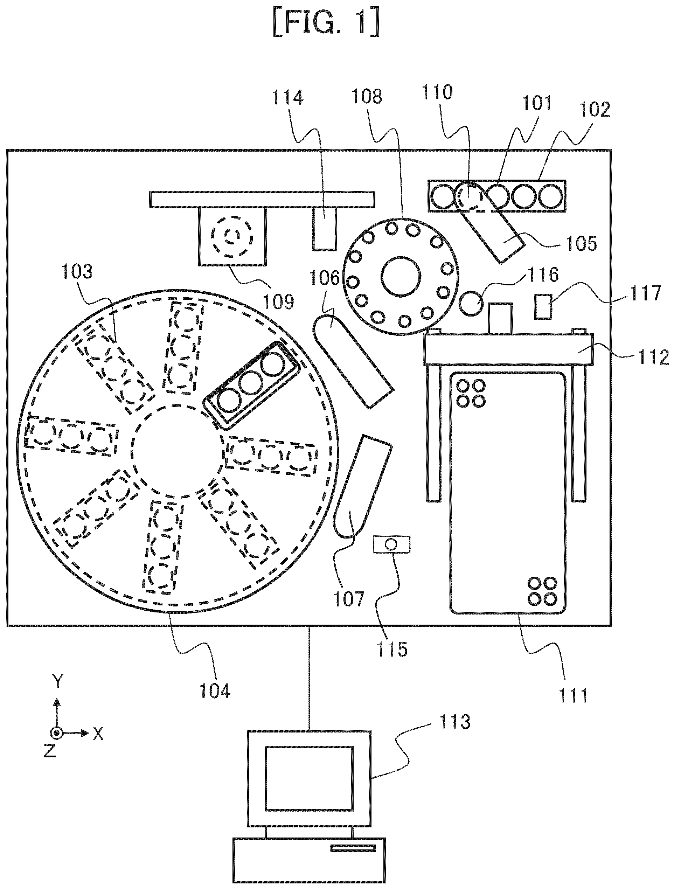

An embodiment of a gripping device and an automatic analyzer of the invention will be described with reference to FIGS. 1 to 10. In the drawings used in the present description, the same or corresponding components are denoted by the same or similar reference signs, and repeated description of these components may be omitted.

In the following embodiment, a case where the gripping device of the invention is provided in a consumables transportation unit 112 in the automatic analyzer will be described, and alternatively, the gripping device of the invention is applicable to a reaction container transportation unit 114, another gripping mechanism, or various mechanisms for holding an object.

Although a case where a gripping object is various containers used in the above-described automatic analyzer will be described, the gripping object is not limited to such containers.

As the embodiment of the invention, an immunoanalyzer that is an example of the automatic analyzer will be described with reference to FIG. 1. FIG. 1 is a schematic configuration diagram of the immunoanalyzer according to the embodiment.

The immunoanalyzer shown in FIG. 1 includes a sample transportation unit 102 that transports a sample container 101 such as a blood collection tube containing a sample to be analyzed to a sample aspiration position 110, a reagent storage unit 104 that controls a temperature of a reagent container 103 containing a reagent to be used for analysis such that a temperature of the reagent is within a certain range, a sample dispensing unit 105 that dispenses the sample in the sample container 101 into a reaction container, a reagent dispensing unit 106 that dispenses the reagent in the reagent container 103 into the reaction container, a stirring unit 107 that stirs particles and the like in a liquid in the reagent container 103 opened upward, a cleaning unit 115 that cleans the stirring unit 107, a reaction promotion unit 108 where the reaction container containing a reaction liquid obtained by mixing the sample and the reagent is provided and which controls the reaction liquid to be within a certain temperature range, a measurement unit 109 that optically measures an amount of a substance in the reaction liquid whose reaction is promoted by the reaction promotion unit, an environmental temperature measurement sensor (omitted for convenience of illustration) for measuring a temperature of a surrounding environment where the immunoanalyzer is disposed, a control device 113 that controls an operation of each unit described above, and the like.

The sample transportation unit 102 is a mechanism for transporting a sample rack where one or a plurality of sample containers 101 are mounted to a destination. Instead of or in addition to the transportation unit, a sample disk disposed on a circumference of a disk may be adopted. In the case of the sample rack, the sample rack is transported to the aspiration position of the sample dispensing unit by a transportation device such as a transportation belt mechanism or a robot arm.

The reagent storage unit 104 is configured to transport any reagent container to a desired position by disposing a plurality of reagent containers 103 on a circumference and rotating, and alternatively, reagent containers may be disposed in a single row or in a plurality of rows vertically and horizontally.

The measurement unit 109 performs optical or electrical measurement on the reaction liquid in the reaction container transported from the reaction promotion unit 108 by the reaction container transportation unit 114. At this time, the reaction liquid in a corresponding flow path is measured in a state of being controlled within the certain temperature range. Examples of measurement operations include measuring absorbance of the reaction liquid, measuring luminescence when the reagent is added to the reaction liquid or a voltage is applied thereto, measuring the number of particles in the reaction liquid, and measuring a change in a current value or a voltage value when the reaction liquid comes into contact with an electrode film. Therefore, in the measurement unit 109, an optical detector such as a photomultiplier tube or a photometer, an imaging element such as a CCD, a current meter or a voltage meter that measures the change in the current value or the voltage value, or the like is provided.

The reaction promotion unit 108 maintains the temperature of the reaction container within the predetermined temperature range to proceed with a stable reaction. Specifically, an example thereof is an incubator that controls the temperature by heating the surroundings with a heater or the like in a state in which a plurality of the reaction containers are disposed on a circumference. Another example of the reaction promotion unit 108 may be a constant temperature bath where the reaction container is immersed in a bath in which a liquid controlled within the certain temperature range circulates.

The sample dispensing unit 105 dispenses the sample in the sample container 101 into the reaction container, and it is required to consider an influence of inter-sample carryover depending on analysis performance required for the analyzer. Therefore, a dispensing tip that can be replaced each time the sample is changed at a portion in contact with the sample when the sample dispensing unit 105 dispenses the sample or an unused reaction container is used each time. At this time, the dispensing tip or the reaction container is discarded after single use.

Therefore, new dispensing tips or reaction containers required for executing analysis for a certain time are stored in a consumables storage unit 111 and supplied, by the consumables transportation unit 112 at an appropriate time, to a place where the dispensing tips or reaction containers are used.

The consumables transportation unit 112 is configured to be movable in a planar direction and a vertical direction, and is configured to be movable above the consumables storage unit 111, the reaction promotion unit 108, a waste hole 117, and a stirring means 116.

The consumables storage unit 111 is configured to be detachable from the immunoanalyzer and is disposed on an upper surface of the immunoanalyzer by an operator in a state in which a plurality of containers are placed.

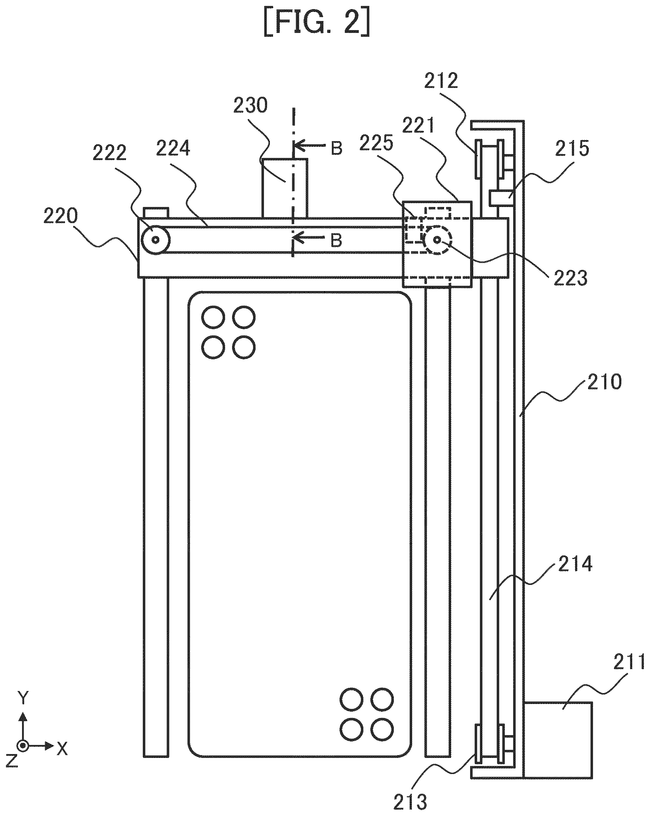

The consumables transportation unit 112 illustrated in FIG. 2 includes a Y axis frame 210 extending in a Y axis direction and an X axis frame 220 extending in a direction orthogonal to the Y axis frame 210. The X axis frame 220 is movably attached to the Y axis frame 210. Further, a Z carrier 230 is attached to the X axis frame 220 in a manner that allows movement in the X axis direction. Further, a container gripping device 240 movable in a Z axis direction is attached into the Z carrier 230. That is, such a transportation mechanism is movable in three axial directions.

The container gripping device 240 grips unused containers one by one from the consumables storage unit 111 and moves the containers to the reaction promotion unit 108 and the stirring means 116.

The consumables transportation unit 112 grips a container after use and moves the container to the waste hole 117. Since it is assumed that the sample or the like adheres to the container after use, and there is a risk of infection or the like when direct contact occurs, for example, by providing a waste box below the waste hole 117 and discarding the container therein, and by finally discarding each waste box, a risk of direct contact can be reduced.

A Y driving motor 211 and a Y driven pulley 212 are attached to the Y axis frame 210. A Y driving pulley 213 is attached to a drive shaft of the Y driving motor 211. A Y toothed belt 214 is suspended between the Y driving pulley 213 and the Y driven pulley 212. A part of an X carrier is fixed to the Y toothed belt 214.

A Y home sensor 215 is attached to the Y axis frame 210. The Y home sensor 215 includes a photocoupler, a Y detection plate fixed to a part of the X axis frame 220 is located in the middle of the photocoupler to shield light emitted from a light emitting unit of the photocoupler, and thus a position of the Y detection plate, that is, a position of the X axis frame 220 can be detected. The Y home sensor 215 detects a Y home position of the X axis frame 220.

With the above configuration, the X axis frame 220 operates as follows.

That is, when the Y driving motor 211 rotates, a rotational force thereof is transmitted to the Y toothed belt 214 via the Y driving pulley 213, and the X axis frame 220 fixed to the Y toothed belt 214 is moved in the Y axis direction.

An X driving motor 221 and an X driven pulley 222 are attached to the X axis frame 220. An X driving pulley 223 is attached to a drive shaft of the X driving motor 221. An X toothed belt 224 is suspended between the X driving pulley 223 and the X driven pulley 222. The Z carrier 230 is connected to the X toothed belt 224.

An X home sensor 225 is attached to the X axis frame 220. The X home sensor 225 includes a photocoupler, an X detection plate fixed to a part of the Z carrier 230 is located in the middle of the photocoupler to shield light emitted from a light emitting diode of the photocoupler, and thus a position of the X detection plate, that is, a position of the Z carrier 230 can be detected. The X home sensor 225 detects an X home position of the Z carrier 230.

With the above configuration, the Z carrier 230 operates as follows. That is, when the X driving motor 221 rotates, a rotational force thereof is transmitted to the X toothed belt 224 via the X driving pulley 223, and the Z carrier 230 fixed to the X toothed belt 224 is moved in the X axis direction.

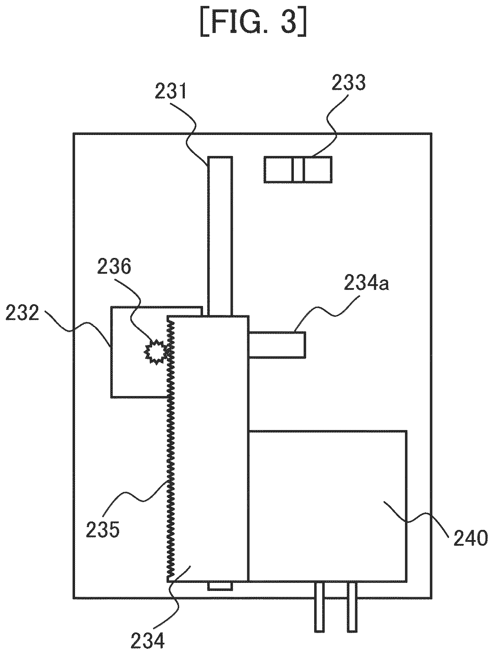

Next, a structure and an operation of the Z carrier 230 will be described with reference to FIG. 3.

A Z axis linear guide 231, a Z driving motor 232, and a Z home sensor 233 are attached to the Z carrier 230. The container gripping device 240 is attached to a sliding piece 234 movable along the Z axis linear guide 231. An L-shaped detection piece 234a is attached to the sliding piece 234, and a Z home position can be detected by a tip of the detection piece 234a crossing a gap between a light-emitting diode and a photodiode of the Z home sensor 233 including a photocoupler. A rack 235 is engraved on a left end of the sliding piece and meshes with a pinion 236 attached to the Z driving motor 232.

With the above configuration, the container gripping device 240 operates as follows. That is, when the Z driving motor 232 rotates, a rotational force thereof is transmitted via the pinion 236 to the rack 235 engraved on the sliding piece 234, and the container gripping device 240 fixed to the sliding piece 234 is moved in the Z axis direction.

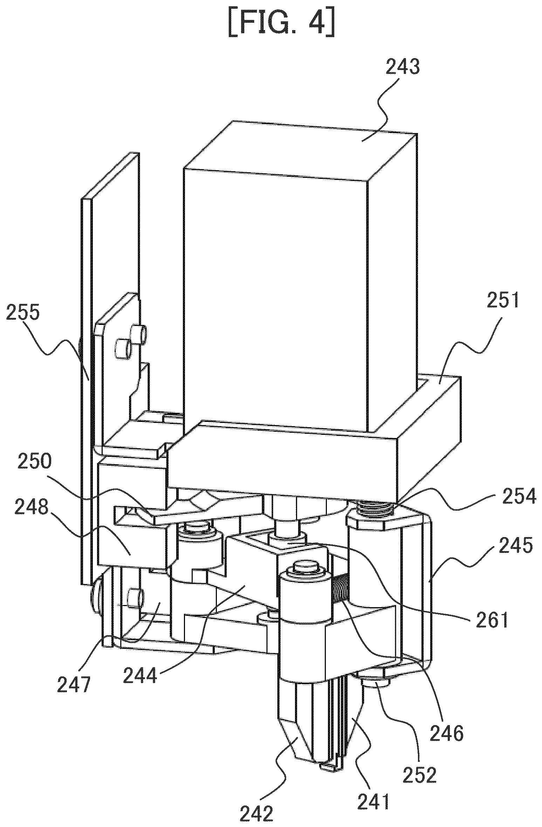

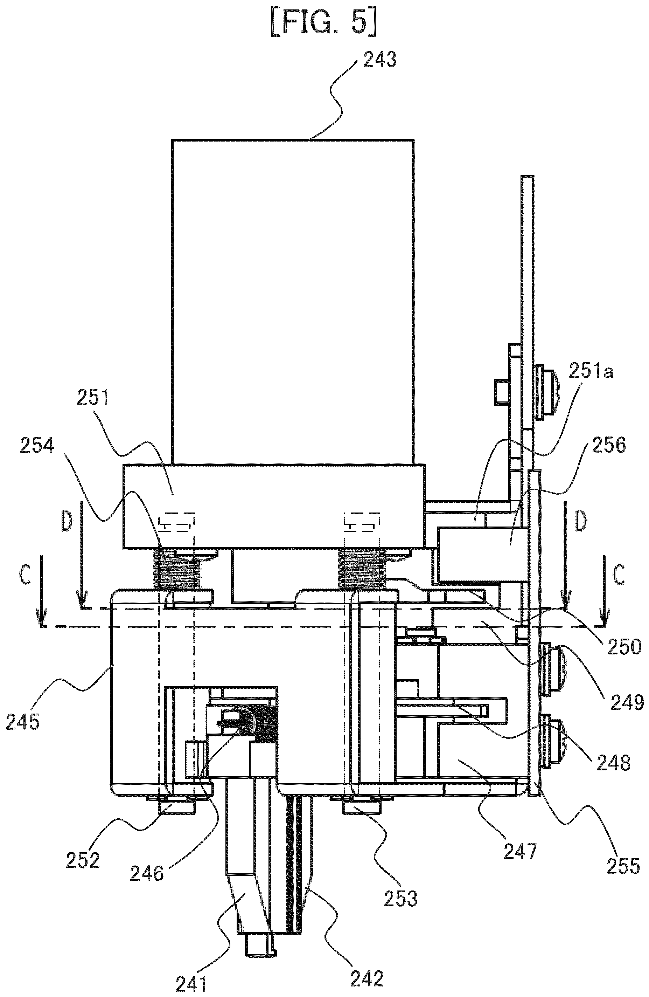

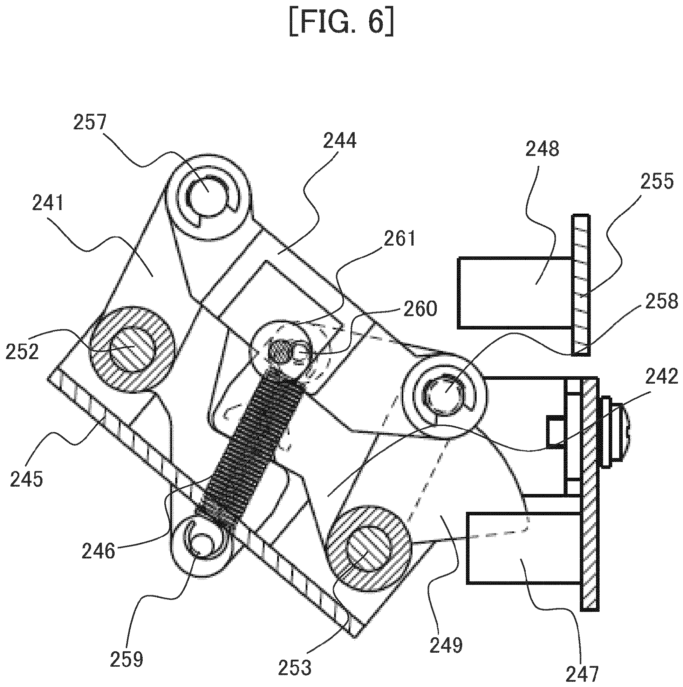

Next, a configuration of the container gripping device 240 and functions of main members will be described with reference to FIGS. 4 to 6. FIG. 4 is a diagram illustrating an appearance of the container gripping device 240 for transporting the container. FIG. 5 is a front view of the container gripping device 240, and FIG. 6 is a view as viewed along C-C in FIG. 5.

As shown in FIGS. 4 to 6, the container gripping device 240 further includes gripping members 241 and 242, an actuator 243, a gripping member connection member 244, a gripping unit base 245, a gripping member pulling spring 246, a gripping member sensor 247, an actuator sensor 248, a gripping member sensor light-shielding member 249, and an actuator sensor light-shielding member 250.

Guide pins 252 and 253 are fixed to an actuator base 251. The gripping unit base 245 is fitted to the guide pins 252 and 253 in a manner of being vertically movable. The gripping member 241 is attached to the guide pin 252 in a manner of being pivotable and vertically movable. The gripping member 242 is also attached to the guide pin 253 in a manner of being pivotable and vertically movable.

Further, a push spring 254 is attached around the guide pins 252 and 253 between the actuator base 251 and the gripping unit base 245, and always pushes the gripping unit base 245 downward against the actuator base 251. Thus, the gripping members 241 and 242 engaged with the gripping unit base 245 are also always pushed downward.

An obstacle sensor 256 is attached to a sensor base 255 attached to the gripping unit base 245. The obstacle sensor 256 includes a photocoupler and detects presence or absence of an obstacle based on whether a detection plate 251a fixed to the actuator base 251 shields the photocoupler from light.

For example, when the container gripping device 240 descends and the gripping members 241 and 242 come into contact with the obstacle, the gripping members 241 and 242 stop descending whereas the container gripping device 240 continues to descend while compressing the push spring 254, thus the detection plate 251a fixed to the actuator base 251 shields the photocoupler from light and presence of the obstacle is detected.

A structure of a gripping unit will be described with reference to FIG. 6.

As illustrated in FIG. 6, the gripping member connection member 244 is rotatably attached to the gripping member 241 and the gripping member 242 by pins 257 and 258. The gripping unit base, the gripping member 241, the gripping member 242, and the gripping member connection member 244 constitute a four-bar link.

In the embodiment, the four-bar link configured with the gripping unit base 245, the gripping member 241, the gripping member 242, and the gripping member connection member 244 is a parallel link where opposing axes are equally spaced and parallel to each other. Therefore, the gripping member 241 and the gripping member 242 rotate in an interlocked manner.

The gripping member pulling spring 246 is suspended between a spring pin 259 attached to the gripping member 241 and a spring pin 260 attached to the gripping member 242. That is, a force in a closing direction is always applied to the gripping members 241 and 242, a force for pressing the container from the outside is applied when the container is gripped, and a force for bringing the gripping member connection member 244 into contact with a cam 261 attached to the actuator 243 is applied when the gripping members 241 and 242 are opened. When the cam 261 attached to the actuator 243 comes into contact with the gripping member connection member 244, rotation of the actuator 243 is transmitted to the gripping member connection member 244. An operation of the gripping member connection member 244 is transmitted to the gripping members 241 and 242 by the parallel link mechanism and thus the gripping members 241 and 242 can be opened. That is, the gripping members 241 and 242 are opened and closed by the actuator 243, and constitute the gripping unit that grips a gripping object by clamping.

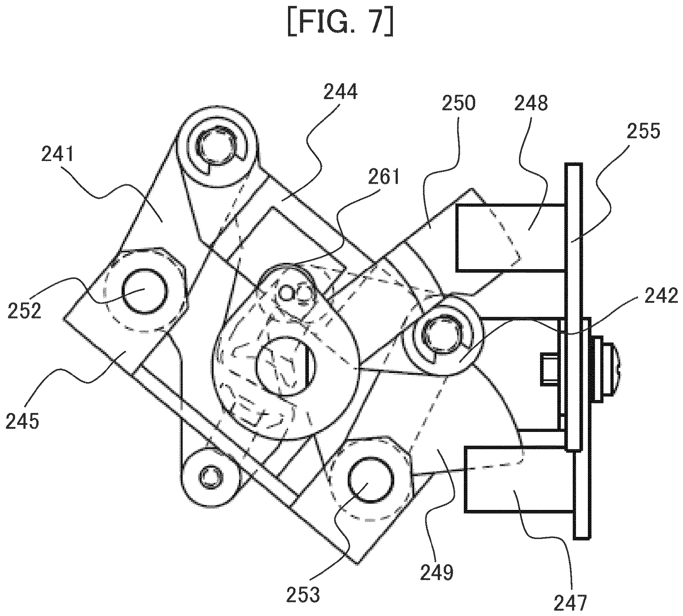

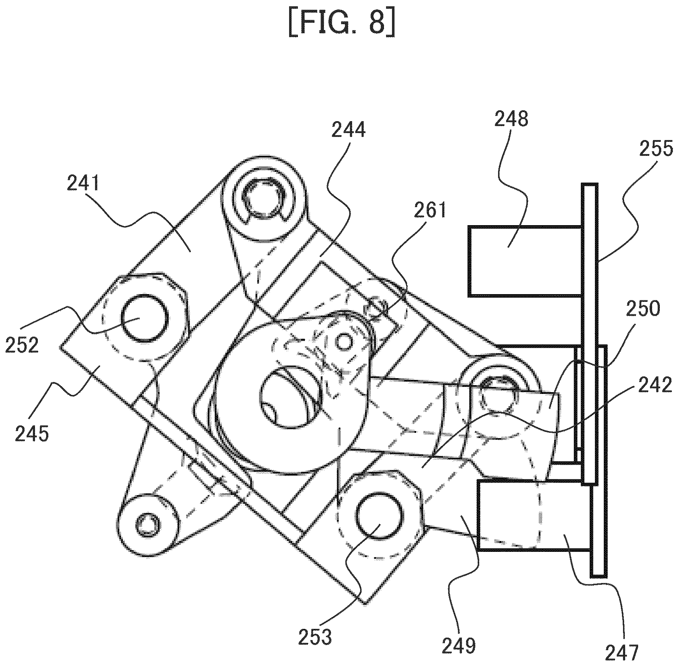

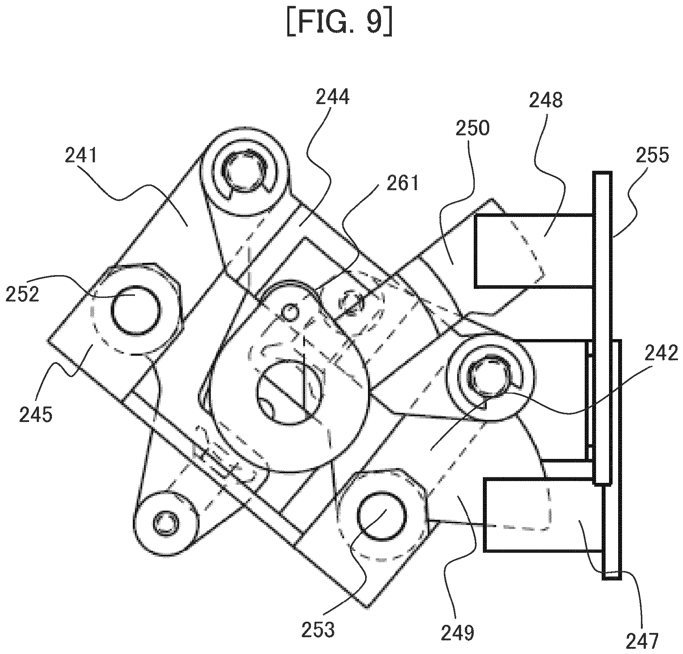

FIGS. 7 to 9 are views as viewed along D-D in FIG. 5. FIG. 7 illustrates a state in which the gripping members 241 and 242 of the container gripping device 240 are closed, FIG. 8 illustrates a state in which the gripping members 241 and 242 of the container gripping device 240 are opened, and FIG. 9 illustrates a state in which the container gripping device 240 grips the container.

As shown in FIGS. 7 to 9, the container gripping device 240 includes the actuator sensor 248, the actuator sensor light-shielding member 250 interlocked with the actuator 243, the gripping member sensor 247, and the gripping member sensor light-shielding member 249 interlocked with one or more of the gripping members 241 and 242.

The actuator sensor 248 includes a first light projecting unit that projects first detection light and a first light receiving unit that receives the first detection light. The first light projecting unit and the first light receiving unit are disposed such that the first detection light is shielded by the actuator sensor light-shielding member 250 when the actuator 243 rotates by a first angle.

More specifically, by the actuator sensor light-shielding member 250 entering between the first light projecting unit and the first light receiving unit and shielding the first detection light, the actuator sensor 248 detects whether the actuator 243 is in a state of opening the gripping members 241 and 242 or in a state of closing the gripping members.

Therefore, when the actuator 243 rotates to close the gripping members 241 and 242, the actuator sensor light-shielding member 250 enters the actuator sensor 248 attached to the sensor base 255, and the actuator sensor 248 is shielded from light. When the actuator 243 rotates to open the gripping members 241 and 242, the actuator sensor light-shielding member 250 exits from the actuator sensor 248, and the actuator sensor 248 is not shielded from light.

The gripping member sensor 247 includes a second light projecting unit that projects second detection light and a second light receiving unit that receives the second detection light. The second light projecting unit and the second light receiving unit are disposed such that the second detection light is shielded by the gripping member sensor light-shielding member 249 when the gripping members 241 and 242 rotate by a second angle.

More specifically, by the gripping member sensor light-shielding member 249 entering between the second light projecting unit and the second light receiving unit and shielding the second detection light, the gripping member sensor 247 detects whether the gripping members 241 and 242 are in a closed state, or a state of being opened or gripping the gripping object.

Therefore, in the state in which the gripping members 241 and 242 are closed, the gripping member sensor light-shielding member 249, which is a part of the gripping member 242, exits from the gripping member sensor 247 attached to the sensor base 255, and the gripping member sensor 247 is not shielded from light. In the state in which the gripping members 241 and 242 are opened, the gripping member sensor light-shielding member 249 enters the gripping member sensor 247, and the gripping member sensor 247 is shielded from light. Further, when the container is gripped, the actuator 243 performs a closing operation and the gripping members 241 and 242 clamp the container, and thus the gripping member sensor light-shielding member 249 does not exit from the gripping member sensor 247.

Then, the control device 113 controls an operation of the gripping unit, and determines, as a container gripping state of the container gripping device 240 based on detection information from the actuator sensor 248 and the gripping member sensor 247, three states, that is, a state in which the gripping members 241 and 242 are opened without gripping the gripping object, a state in which the gripping members are closed without gripping the gripping object, and a state in which the gripping members grip the gripping object.

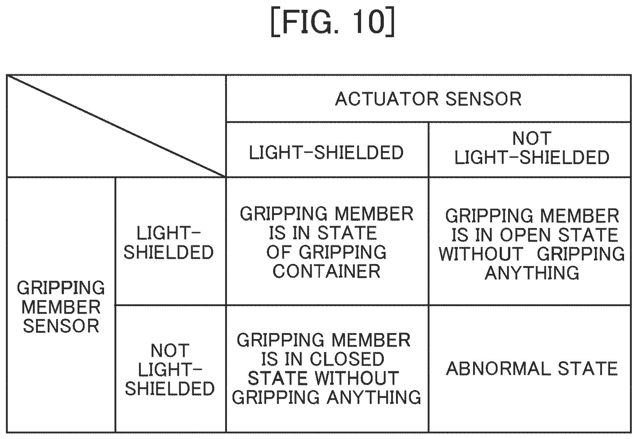

That is, as summarized in FIG. 10, it is possible to determine three states, that is, (1) a state in which the actuator sensor 248 is shielded from light and the gripping member sensor 247 is not shielded from light (the state in which the gripping members 241 and 242 are closed without gripping anything), (2) a state in which the actuator sensor 248 is not shielded from light and the gripping member sensor 247 is shielded from light (the state in which the gripping members 241 and 242 are opened without gripping anything), and (3) a state in which the actuator sensor 248 is shielded from light and the gripping member sensor 247 is shielded from light (the state in which the gripping members 241 and 242 grip the container).

Further, upon detecting a state in which the actuator sensor 248 is not shielded from light and the gripping member sensor 247 is not shielded from light, since the above-described state is not detected in a normal operation, it is possible to determine that the state is an abnormal state.

Further, when controlling to transition from a first state among the three states to a second state different from the first state among the three states, in a case where the control device 113 determines that the state is the first state or a third state, the control device 113 compares detection information from the actuator sensor 248 in the second state with the detection information from the actuator sensor 248 in the first state or the third state, determines that there is an abnormality in the actuator 243 when there is a difference, and determines that there is an abnormality in a connection portion between the actuator 243 and the gripping members 241 and 242 and/or the gripping members 241 and 242 when the detection information matches. Hereinafter, a specific example thereof will be described.

When the container gripping device 240 is to grip the container held by the consumables storage unit 111 or the like, after the container gripping device 240 horizontally moves to above the container, the actuator 243 performs an opening operation to cause the state to transition from the state in which the gripping members 241 and 242 are closed without gripping anything to the state in which the gripping members 241 and 242 are opened without gripping anything, and after the container gripping device 240 descends in the vertical direction to a height at which the container can be gripped, the actuator 243 performs a closing operation to cause the state to transition from the state in which the gripping members 241 and 242 are opened without gripping anything to the state in which the gripping members 241 and 242 grip the container, and then the container gripping device 240 ascends in the vertical direction.

When transitioning from the state in which the gripping members 241 and 242 are closed without gripping anything to the state in which the gripping members 241 and 242 are opened without gripping anything during the above operation, in a case where the container gripping state of the container gripping device 240 based on the detection information from the actuator sensor 248 and the gripping member sensor 247 is different from the state of being opened without gripping anything, it can be determined that an abnormality has occurred in the operation of the container gripping device 240 opening the gripping members 241 and 242.

When transitioning from the state in which the gripping members 241 and 242 are opened without gripping anything to the state in which the gripping members 241 and 242 grip the container, in a case where the container gripping state of the container gripping device 240 based on the detection information from the actuator sensor 248 and the gripping member sensor 247 is different from the state in which the gripping members 241 and 242 grip the container, it can be determined that an abnormality has occurred in the operation of the container gripping device 240 gripping the container.

Further, when the container gripped by the container gripping device 240 is to be discarded at a discard position, after the container gripping device 240 horizontally moves to above the discard position, the state transitions from the state in which the gripping members 241 and 242 grip the container to the state in which the gripping members 241 and 242 are opened without gripping anything, and after the container is discarded, the state transitions from the state in which the gripping members 241 and 242 are opened without gripping anything to the state in which the gripping members 241 and 242 are closed without gripping anything.

When transitioning from the state in which the gripping members 241 and 242 grip the container to the state in which the gripping members 241 and 242 are opened without gripping anything during the above operation, in a case where the container gripping state of the container gripping device 240 based on the detection information from the actuator sensor 248 and the gripping member sensor 247 is different from the state of being opened without gripping anything, it can be determined that an abnormality has occurred in the operation of the container gripping device 240 opening the gripping members 241 and 242.

When transitioning from the state in which the gripping members 241 and 242 are opened without gripping anything to the state in which the gripping members 241 and 242 are closed without gripping anything during the above operation, in a case where the container gripping state of the container gripping device 240 based on the detection information from the actuator sensor 248 and the gripping member sensor 247 is different from the state in which the gripping members 241 and 242 are closed without gripping anything, it can be determined that an abnormality has occurred in the operation of the container gripping device 240 closing the gripping members 241 and 242.

In this way, regarding the abnormalities in the operation of the container gripping device 240, by providing the sensors on the actuator 243 side and the gripping members 241 and 242 side,respectively, it is possible to distinguish between the abnormality on the actuator 243 side and the abnormality on the gripping unit side.

There are four normal state changes of the container gripping device 240, that is, (1) a change from the state in which the gripping members 241 and 242 are closed without gripping anything to the state in which the gripping members 241 and 242 are opened without gripping anything, (2) a change from the state in which the gripping members 241 and 242 are opened without gripping anything to the state in which the gripping members 241 and 242 grip the container, (3) a change from the state in which the gripping members 241 and 242 grip the container to the state in which the gripping members 241 and 242 are opened without gripping anything, and (4) a change from the state in which the gripping members 241 and 242 are opened without gripping anything to the state in which the gripping members 241 and 242 are closed without gripping anything.

The state of the actuator 243 changes in each case before and after the four state changes. That is, in a case where the light-shielding state of the actuator sensor 248 does not change before and after the operation when an abnormality occurs, it can be determined that there is an abnormality on the actuator 243 side. In a case where the light shielding state of the actuator sensor 248 changes before and after the operation when an abnormality occurs, it can be determined that the actuator 243 operates normally, and there is an abnormality in a state of a portion other than the actuator 243, for example, the gripping members 241 and 242, the connection portion between the gripping members 241 and 242 and the actuator 243, or the gripping state of the container.

Next, effects of the embodiment will be described.

The container gripping device 240 of the present embodiment described above includes: the gripping unit that grips the container by clamping the container with the two or more gripping members 241 and 242 opened and closed by the actuator 243; the actuator sensor 248 including the first light projecting unit that projects the first detection light and the first light receiving unit that receives the first detection light; the gripping member sensor 247 including the second light projecting unit that projects the second detection light and the second light receiving unit that receives the second detection light; the control device 113 that performs, based on the detection information from the actuator sensor 248 and the gripping member sensor 247, determination related to the three states, that is, the state in which the gripping members 241 and 242 are opened without gripping the container, the state in which the gripping members are closed without gripping the container, and the state in which the gripping members grip the container; the actuator sensor light-shielding member 250 interlocked with the actuator 243; and the gripping member sensor light-shielding member 249 interlocked with any one or more of the gripping members 241 and 242. By the actuator sensor light-shielding member 250 entering between the first light projecting unit and the first light receiving unit and shielding the first detection light, the actuator sensor 248 detects the state in which the actuator 243 performs an operation of opening the gripping members 241 and 242 or the state in which the actuator 243 performs an operation of closing the gripping members. By the gripping member sensor light-shielding member 249 entering between the second light projecting unit and the second light receiving unit and shielding the second detection light, the gripping member sensor 247 detects the state in which the gripping members 241 and 242 are closed, the state in which the gripping members are opened or grip the container.

Thus, since it is possible to reliably determine the three states of the container transportation mechanism, it is possible to more appropriately implement countermeasures, thus it is possible to enable faster recovery when an abnormality occurs as compared to the related art, and to prevent a decrease in analysis throughput as compared to the related art.

Opening and closing of the gripping unit are performed by rotation of the actuator 243 and rotation of the gripping members 241 and 242 interlocked with the rotation of the actuator 243, the first light projecting unit and the first light receiving unit are disposed such that the first detection light is shielded by the actuator sensor light-shielding member 250 when the actuator 243 rotate by the first angle, and the second light projecting unit and the second light receiving unit are disposed such that the second detection light is shielded by the gripping member sensor light-shielding member 249 when the gripping members 241 and 242 rotate by the second angle. Therefore, two state quantities can be measured and distinguished from each other based on a motion state in one motion system since motions are interlocked, and accordingly, state distinction becomes easier and thus the three states of the container transportation mechanism can be reliably distinguished from each other, thus recovery at the time of occurrence of an abnormality can be faster as compared to the related art, and a decrease in analysis throughput can be prevented as compared to the related art. In addition, since the number of drive systems is small, it is possible to improve maintenance, reduce a size of the device, facilitate manufacturing, and reduce cost.

The opening and closing of the gripping unit are performed by the rotation of the actuator 243 and the rotation of the gripping members 241 and 242 interlocked with the rotation of the actuator 243, the first light projecting unit and the first light receiving unit are disposed such that the first detection light is shielded by the actuator sensor light-shielding member 250 when the actuator 243 rotates by the first angle, and the second light projecting unit and the second light receiving unit are disposed such that the second detection light is shielded by the gripping member sensor light-shielding member 249 when the gripping members 241 and 242 rotate by the second angle, thus it is easier to specify an abnormal portion, and it is possible to further accelerate recovery when an abnormality occurs.

### <Others>

The invention is not limited to the embodiment described above, and various modifications and applications are possible. The embodiment described above is described in detail for easy understanding of the invention, and the invention is not necessarily limited to those having all the configurations described above.

### Reference Signs List

- 101:: sample container
- 102:: sample transportation unit
- 103:: reagent container
- 104:: reagent storage unit
- 105:: sample dispensing unit
- 106:: reagent dispensing unit
- 107:: stirring unit
- 108:: reaction promotion unit
- 109:: measurement unit
- 110:: sample aspiration position
- 111:: consumables storage unit
- 112:: consumables transportation unit
- 113:: control device (determination unit, control unit)
- 114:: reaction container transportation unit
- 115:: cleaning unit
- 116:: stirring means
- 117:: waste hole
- 210:: Y axis frame
- 211:: Y driving motor
- 212:: Y driven pulley
- 213:: Y driving pulley
- 214:: belt
- 215:: Y home sensor
- 220:: X axis frame
- 221:: X driving motor
- 222:: X driven pulley
- 223:: X driving pulley
- 224:: X toothed belt
- 225:: X home sensor
- 230:: Z carrier
- 231:: linear guide
- 232:: Z driving motor
- 233:: Z home sensor
- 234:: sliding piece
- 234a:: detection piece
- 235:: rack
- 236:: pinion
- 240:: container gripping device
- 241, 242:: gripping member (member)
- 243:: actuator
- 244:: gripping member connection member
- 245:: gripping unit base
- 246:: gripping member pulling spring
- 247:: gripping member sensor (second sensor)
- 248:: actuator sensor (first sensor)
- 249:: gripping member sensor light-shielding member (second light-shielding member)
- 250:: actuator sensor light-shielding member (first light-shielding member)
- 251:: actuator base
- 251a:: detection plate
- 252,: 253: guide pin
- 254:: push spring
- 255:: sensor base
- 256:: obstacle sensor
- 257, 258:: pin
- 259, 260:: spring pin
- 261:: cam

## Claims

1. A gripping device, comprising:
a gripping unit gripping a gripping object by sandwiching the gripping object with two or more members that are opened/closed by an actuator;
a first sensor including a first light projecting unit and a first light receiving unit, the first light projecting unit projecting first detection light, the first light receiving unit receiving the first detection light;
a second sensor including a second light projecting unit and a second light receiving unit, the second light projecting unit projecting second detection light, the second light receiving unit receiving the second detection light;
a determination unit that executes determination related to three states of a state that the member opens without gripping the gripping object, a state that the member closes without gripping the gripping object, and a state that the member grips the gripping object, based on detection information of the first sensor and the second sensor;
a first light-shielding member that is interlocked with the actuator; and
a second light-shielding member that is interlocked with either one or more of the members, wherein
the first sensor detects either of a state that the actuator is in an operation of opening the member or a state that the actuator is in an operation of closing the member, by shielding the first detection light in a manner that the first light-shielding member enters between the first light projecting unit and the first light receiving unit, and
the second sensor detects either of a state that the member is closed or a state that the member is opened or grips the gripping object, by shielding the second detection light in a manner that the second light-shielding member enters between the second light projecting unit and the second light receiving unit.

2. The gripping device according to claim 1, wherein
opening/closing operation of the gripping unit is executed by rotating operation of the actuator and rotating operation of the member interlocked with the rotating operation of the actuator,
the first light projecting unit and the first light receiving unit are disposed so that the first detection light is shielded by the first light-shielding member when the actuator rotates by a first angle, and
the second light projecting unit and the second light receiving unit are disposed so that the second detection light is shielded by the second light-shielding member when the member rotates by a second angle.

3. The gripping device according to claim 1 further comprising:
a control unit that controls the gripping unit, wherein
when the determination unit determines to be in a first state out of the three states of the gripping unit or in a third state out of the three states of the gripping unit at a time when the control unit executes control of shifting from the first state to a second state out of the three states of the gripping unit, the second state being different from the first state,
the determination unit checks detection information of the first sensor in the second state and detection information of the second sensor in the first state or the third state, determines that the actuator is abnormal when the detection information of the first sensor and the detection information of the second sensor are different from each other, and determines that a connection portion of the actuator and the member and/or the member is abnormal when the detection information of the first sensor and the detection information of the second sensor agree to each other.

4. A gripping device, comprising:
a gripping unit gripping a gripping object by sandwiching the gripping object with two or more members that are opened/closed by an actuator;
a first sensor including a first light projecting unit and a first light receiving unit, the first light projecting unit projecting first detection light, the first light receiving unit receiving the first detection light;
a second sensor including a second light projecting unit and a second light receiving unit, the second light projecting unit projecting second detection light, the second light receiving unit receiving the second detection light;
a determination unit that executes determination related to three states of a state that the member opens without gripping the gripping object, a state that the member closes without gripping the gripping object, and a state that the member grips the gripping object, based on detection information of the first sensor and the second sensor;
a first light-shielding member that is interlocked with the actuator; and
a second light-shielding member that is interlocked with either one or more of the members, wherein
opening/closing operation of the gripping unit is executed by rotating operation of the actuator and rotating operation of the member that is interlocked with the rotating operation of the actuator,
the first light projecting unit and the first light receiving unit are disposed so that the first detection light is shielded by the first light-shielding member when the actuator rotates by a first angle, and
the second light projecting unit and the second light receiving unit are disposed so that the second detection light is shielded by the second light-shielding member when the member rotates by a second angle.

5. An automatic analyzer comprising the gripping device according to claim 1 or 4.

6. The automatic analyzer according to claim 5, wherein
the gripping object is a container used for analyzation of a sample.
